# EUROPEAN PATENT APPLICATION

(11) **EP 4 538 627 A1**
(43) Date of publication of application: **16.04.2025**
(21) Application number: 23819869.1
(22) Date of filing: 07.06.2023
(51) Int. Cl.: F28F 7/02, B33Y 80/00, F28D 21/00

(54) **STRUCTURAL BODY**

(30) Priority: 08.06.2022 JP 2022092816
(71) Applicant: Nature Architects Inc., Tokyo 107-0052 (JP)
(72) Inventor: SUTO, Kai, Tokyo 107-0052 (JP); SHINTANI, Kunitaka, Tokyo 107-0052 (JP)
(74) Representative: Tiburzi, Andrea
(86) International application number: PCT/JP2023/021149
(87) International publication number: WO 2023/238889

(57) **Abstract**

An embodiment of the present disclosure provides a structure (1) for heat exchange, the structure (1) including a partition wall structure (10) that forms a first flow channel space (12) and a second flow channel space (14) with the first flow channel space and the second flow channel space separated from each other, the first flow channel space (12) being a space in which a plurality of first flow channels (12a) extending spirally in a certain direction are formed in communication with each other, the second flow channel space (14) being a space in which a plurality of second flow channels (14a) extending spirally in the certain direction are formed in communication with each other. Two adjacent first flow channels (12a) among the plurality of first flow channels (12a) are formed such that, when viewed along the direction in which the plurality of first flow channels (12a) extend, one first flow channel of the two adjacent first flow channels (12a) turns in a first direction, and the other first flow channel of the two adjacent first flow channels (12a) turns in a second direction opposite to the first direction. Two adjacent second flow channels (14a) among the plurality of second flow channels (14a) are formed such that, when viewed along the direction in which the plurality of second flow channels (14a) extend, one second flow channel of the two adjacent second flow channels (14a) turns in the first direction, and the other second flow channel of the two adjacent second flow channels (14a) turns in the second direction opposite to the first direction.

## Description

### Technical Field

The present disclosure relates to a structure, and more specifically to a structure that can be used in applications such as heat exchange.

### Background Art

Patent Literatures (PTLS) 1 and 2 disclose heat exchangers including two flow channels separated from each other by various periodic minimal curved surfaces. The structures disclosed in PTLS 1 and 2 can improve heat exchange efficiency by using a periodic minimal curved surface for a partition wall that separates the two flow channels to increase the specific surface area of the partition wall.

### Citation List

### Patent Literature

PTL 1
   US Patent Application Publication No. 2020/0033070
PTL 2
   US Patent No. 10704841

### Summary of Invention

### Technical Problem

In the structures disclosed in PTLS 1 and 2, especially in the structures formed based on the Gyroid curved surface, two adjacent flow channels among a plurality of flow channels extending spirally in one certain direction are formed to turn in the same direction (for example, clockwise) when the plurality of flow channels are viewed along their extending direction. This may cause, in a region where fluids flowing through the two adjacent flow channels meet, the fluids flowing through the respective flow channels to collide with each other in opposite directions, and stagnation of the fluid flow may occur in that region. Such hindrance of the fluid flow may lead to a decrease in heat exchange efficiency (an increase in pressure loss that does not contribute to an increase in heat transfer rate, in other words, a deterioration in the trade-off between the pressure loss and the heat transfer rate).

Also in the structures formed based on the other kinds of periodic minimal curved surfaces disclosed in PTLS 1 and 2, flow directions in a region where fluids flowing through two adjacent flow channels meet are not aligned, and thus a collision between the fluids and stagnation of the fluid flow may occur in the region where the fluids meet.

### Solution to Problem

An aspect of the present disclosure provides a structure for heat exchange, the structure including a partition wall structure that forms a first flow channel space and a second flow channel space with the first flow channel space and the second flow channel space separated from each other, the first flow channel space being a space in which a plurality of first flow channels extending spirally in a certain direction are formed in communication with each other, the second flow channel space being a space in which a plurality of second flow channels extending spirally in the certain direction are formed in communication with each other. Two adjacent first flow channels among the plurality of first flow channels are formed such that, when viewed along the direction in which the plurality of first flow channels extend, one first flow channel of the two adjacent first flow channels turns in a first direction, and the other first flow channel of the two adjacent first flow channels turns in a second direction opposite to the first direction. Two adjacent second flow channels among the plurality of second flow channels are formed such that, when viewed along the direction in which the plurality of second flow channels extend, one second flow channel of the two adjacent second flow channels turns in the first direction, and the other second flow channel of the two adjacent second flow channels turns in the second direction opposite to the first direction.

Other features and advantages of the present disclosure will be understood from the following description and the accompanying drawings, given illustratively and non-comprehensively.

### Brief Description of Drawings

FIG. 1 is a perspective view illustrating a structure according to an embodiment of the present disclosure;
FIG. 2A is a perspective view illustrating a first flow channel element that forms a partition wall structure;
FIG. 2B is a perspective view illustrating a second flow channel element that forms the partition wall structure;
FIG. 3 is a diagram illustrating a cross section appearing on the top surface of the structure illustrated in FIG. 1;
FIG. 4 is a diagram illustrating a state in which a first flow channel space of the structure illustrated in FIG. 1 is filled with a first fluid;
FIG. 5 is a diagram illustrating a state in which a second flow channel space of the structure illustrated in FIG. 1 is filled with a second fluid;
FIG. 6A is a conceptual diagram illustrating another partition wall structure composed of a flow channel element having another shape and configuration;
FIG. 6B is a conceptual diagram illustrating still another partition wall structure composed of a flow channel element having still another shape and configuration;
FIG. 7 is a perspective view illustrating a first variation of the structure according to the embodiment of the present disclosure;
FIG. 8A is a diagram illustrating another configuration example relating to cross-sectional areas of a first flow channel and a second flow channel within the partition wall structure;
FIG. 8B is a diagram illustrating still another configuration example relating to the cross-sectional areas of the first flow channel and the second flow channel within the partition wall structure;
FIG. 8C is a diagram illustrating still another configuration example relating to the cross-sectional areas of the first flow channel and the second flow channel within the partition wall structure;
FIG. 9 is a perspective view illustrating a second variation of the structure according to the embodiment of the present disclosure;
FIG. 10 is a perspective view illustrating a third variation of the structure according to the embodiment of the present disclosure;
FIG. 11 is a perspective view illustrating a structure according to a fourth variation of the embodiment of the present disclosure in a partially broken state; and
FIG. 12 is a perspective view illustrating the entire structure illustrated in FIG. 11.

### Description of Embodiments

Hereinafter, embodiments of the present disclosure will be described with reference to the accompanying drawings.

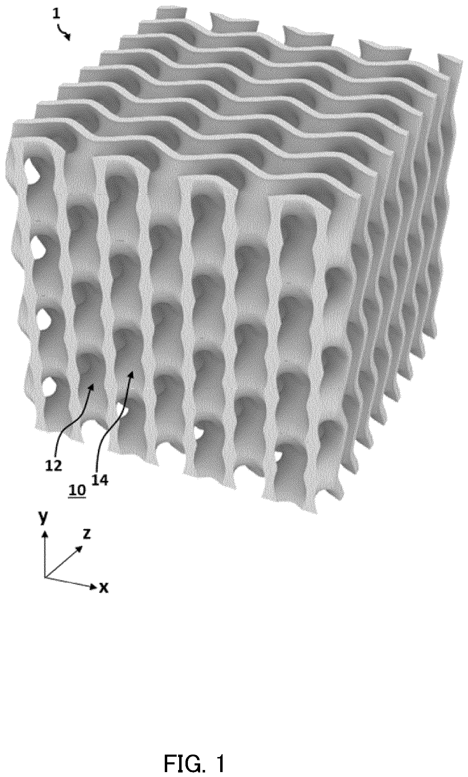

First, the overall configuration of a structure 1 according to an embodiment of the present disclosure will be described. FIG. 1 is a perspective view illustrating a structure according to an embodiment of the present disclosure.

As illustrated in FIG. 1, a structure 1 of the present embodiment includes a partition wall structure 10 that forms two flow channel spaces 12 and 14 that are separated from each other. In the description of the present embodiment, a coordinate system is defined with a lateral direction of the structure 1 as an x-axis, a longitudinal direction as a y-axis, and a depth direction as a z-axis, as shown in FIG. 1.

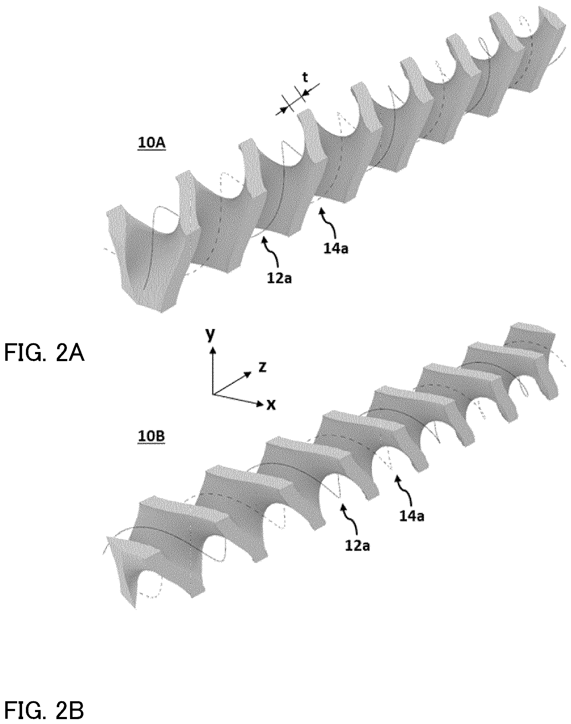

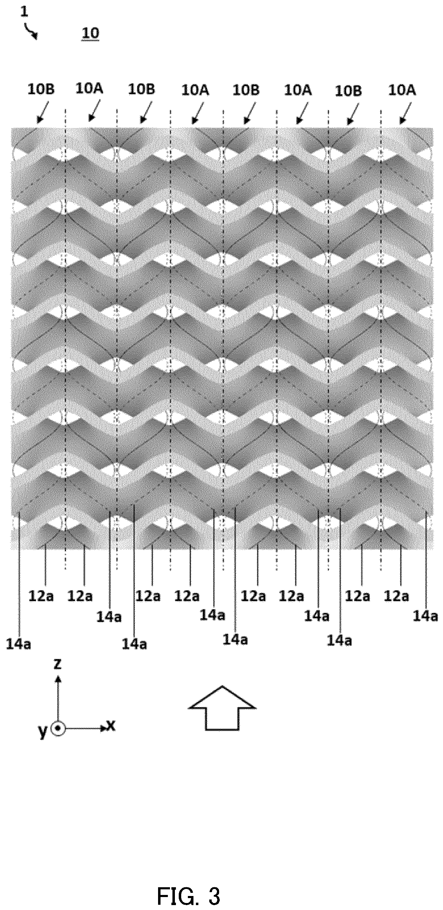

The partition wall structure 10 forms a first flow channel space 12 in which a plurality of first flow channels 12a (see FIG. 3, for example) through which a first fluid flows are formed in communication with each other and a second flow channel space 14 in which a plurality of second flow channels 14a (see FIG. 3, for example) through which a second fluid flows are formed in communication with each other. These two flow channel spaces 12 and 14 are separated from each other by the partition wall structure 10, and the first and second fluids that flow through the two flow channel spaces 12 and 14, respectively, do not mix with each other. As will be described later, the partition wall structure 10 of the present embodiment has a configuration in which first flow channel elements 10A (see FIG. 2A), each formed with a predetermined thickness in a helicoid curved surface turning in a first direction (for example, counterclockwise) when viewed along an extending direction (z direction shown in the figure), and second flow channel elements 10B (see FIG. 2B), each formed with a predetermined thickness in a helicoid curved surface turning in a second direction (for example, clockwise) when viewed along the extending direction, are alternately disposed in a lattice shape.

In FIG. 1, each flow channel space is illustrated as being open at each face of the structure 1 having a cubic shape for the sake of clarity of illustration and description, but each flow channel space is closed at its end that appears at a relevant face of the structure 1 according to a direction in which the corresponding one of the first and second fluids flows within the structure 1. For example, when the first fluid and the second fluid are flowed within the structure 1 in the depth direction shown in the figure (z-axis direction), ends that appear at each face of the structure 1 in the left-right direction shown in the figure (yz plane) and each face of the structure 1 in the up-down direction shown in the figure (xz plane) are closed.

According to the structure 1 of the present embodiment thus configured, the first fluid that has flowed into the first flow channel space 12 of the partition wall structure 10 from an end surface on the front side (xy plane) as shown in FIG. 1 flows through the first flow channel space 12 and flows out to the outside from the first flow channel space 12 at an end surface on the back side as shown in FIG. 1. The first fluid may be alternatively flowed in a direction opposite to this. On the other hand, the second fluid that has flowed into the second flow channel space 14 of the partition wall structure 10 from the end surface on the front side (xy plane) as shown in FIG. 1 flows through the second flow channel space 14 and flows out to the outside from the second flow channel space 14 at the end surface on the back side as shown in FIG. 1. The second fluid may also be alternatively flowed in the direction opposite to this. The first fluid and the second fluid may be flowed within the respectively corresponding first and second flow channel spaces 12 and 14 of the partition wall structure 10 in the same direction or in opposite directions.

When there is a difference in temperature between the first fluid flowing through the first flow channel space 12 and the second fluid flowing through the second flow channel space 14, heat of one fluid is transferred to the other fluid through the wall of the partition wall structure 10 that separates both flow channel spaces 12 and 14. This causes heat exchange in which one fluid is heated by the other fluid and conversely the other fluid is cooled by the one fluid. The structure 1 of the present embodiment can function for the application of heat exchange in this way. The structure 1 of the present example is also applicable to, for example, heat exchangers for various industrial uses and heat exchangers used for aircraft engines, power plants, and the like.

Next, the partition wall structure 10 in the structure 1 of the present embodiment will be described. FIG. 2A is a perspective view illustrating a first flow channel element forming the partition wall structure, and FIG. 2B is a perspective view illustrating a second flow channel element forming the partition wall structure.

In the present embodiment, the partition wall structure 10 has a configuration in which the first flow channel elements 10A and the second flow channel elements 10B are alternately disposed in a lattice shape. Each first flow channel element 10A is formed with a predetermined thickness t in a helicoid curved surface turning in a first direction (for example, counterclockwise) when the respective flow channels 12a and 14a that extend spirally are viewed along an extending direction (a direction along the z-axis in FIG. 1), and each second flow channel element 10B is formed with a predetermined thickness t in a helicoid curved surface turning in the second direction (for example, clockwise) opposite to the first direction when viewed along the extending direction.

As illustrated in FIG. 2A, the first flow channel element 10A has a shape in which a structure formed in a shape having a uniform thickness t in a helicoid curved surface (ordinary helicoid) extending in an extending direction while turning counterclockwise spirally is cut out in a cuboidal shape having the central axis of the helicoid curved surface as its central axis. Although a helicoid curved surface has a circular shape when viewed in an extending direction, the first flow channel element 10A has a shape obtained by cutting out such a helicoid curved surface into a cuboidal shape, and thus the first flow channel element 10A has a square shape when viewed in the extending direction. As illustrated in the figure, the first flow channel element 10A defines the first flow channel 12a indicated by a solid auxiliary line in the figure and the second flow channel 14a indicated by a broken auxiliary line in the figure, by a partition wall that is composed of the helicoid curved surface. The first flow channel 12a and the second flow channel 14a formed by the first flow channel element 10A extend spirally in the extending direction while turning counterclockwise when viewed along the extending direction.

On the other hand, as illustrated in FIG. 2B, the second flow channel element 10B has a shape in which the first flow channel element 10A is mirror-inverted, and the first flow channel element 10A and the second flow channel element 10B are in a relationship in which the first flow channel element 10A and the second flow channel element 10B have chirality with respect to each other (they are chiral to each other). Accordingly, the second flow channel element 10B has a shape in which a structure formed in a shape having a uniform thickness t in a helicoid curved surface (ordinary helicoid) extending in the extending direction while turning counterclockwise spirally is cut out in a cuboidal shape having the central axis of the helicoid curved surface as its central axis. The first flow channel 12a and the second flow channel 14a formed by the second flow channel element 10B extend spirally in the extending direction while turning clockwise when viewed in the extending direction. The turning direction of the helicoid curved surface of the second flow channel element 10B is opposite to the turning direction of the helicoid of the first flow channel element 10A, but dimensions of each part of the second flow channel element 10B such as, for example, a pitch of the ordinary helicoid extending in the extending direction and a thickness t provided to the ordinary helicoid are the same as those of the first flow channel element 10A.

The partition wall structure 10 has a configuration in which the first flow channel elements 10A and the second flow channel elements 10B as described above are alternately disposed adjacent to each other in a lattice shape in a direction (xy plane in FIG. 1) orthogonal to the extending direction (the direction along the z-axis in FIG. 1) of the respective flow channels 12a and 14a. Note that the first flow channel element 10A and the second flow channel element 10B that are adjacent to each other are disposed such that, among the sides of their cuboidal shape in the extending direction, sides on which partition wall cross-sectional shapes chiral to each other appear are in contact with each other. This causes the adjacent first and second flow channel elements 10A and 10B to have their partition walls, composed of the helicoid curved surfaces turning in opposite directions, continuous with each other, and thus the first flow channels 12a defined by the respective elements 10A and 10B communicate with each other, and the second flow channels 14a defined by the respective elements 10A and 10B communicate with each other.

The partition wall structure 10 of the present embodiment is configured to have the first flow channel elements 10A and the second flow channel elements 10B alternately disposed adjacent to each other in a lattice shape as seen from the above, thereby forming the first flow channel space 12 that is formed by the plurality of first flow channels 12a (see FIG. 3, for example) being in communication with each other through which the first fluid flows and the second flow channel space 14 that is formed by the plurality of second flow channels 14a (see FIG. 3, for example) being in communication with each other through which the second fluid flows, as described above.

Next, the configuration of the first flow channels 12a and the second flow channels 14a formed in the partition wall structure 10 will be described in more detail. FIG. 3 is a diagram illustrating a cross section appearing on the top surface of the structure illustrated in FIG. 1.

Referring to FIG. 3, in a cross section taken along the xz plane shown in FIG. 3, the partition wall structure 10 of the structure 1 of the present embodiment has a configuration in which the first flow channel elements 10A and the second flow channel elements 10B are alternately disposed in the lateral direction (x direction) shown in the figure and in the longitudinal direction (y direction) shown in the figure such that their respective flow channel walls corresponding to each other are in contact. In the figure, configuration boundaries between the first flow channel elements 10A and the second flow channel elements 10B are indicated by one-dot chain lines for the sake of easy understanding. As can be seen from FIG. 3, the first flow channels 12a of the respective flow channel elements 10A and 10B communicate with each other in the lateral direction (x direction) shown in the figure, and the second flow channels 14a of the respective flow channel elements 10A and 10B also communicate with each other in the lateral direction (x direction) shown in the figure. Similarly, the first flow channels 12a of the respective flow channel elements 10A and 10B communicate with each other in the longitudinal direction (y direction) shown in the figure, and the second flow channels 14a of the respective flow channel elements 10A and 10B also communicate with each other in the longitudinal direction (y direction) shown in the figure. These first flow channels 12a form the first flow channel space 12 through which the first fluid flows and in which the first flow channels 12a communicate with each other to form a complicated and intricate labyrinth. Further, these second flow channels 14a form the second flow channel space 14 through which the second fluid flows and in which the second flow channels 14a communicate with each other to form a complicated and intricate labyrinth.

As described above, the first and second flow channels 12a and 14a of the first flow channel elements 10A and the first and second flow channels 12a and 14a of the second flow channel elements 10B are formed to turn in opposite directions when viewed along the extending direction. Thus, when the first and second fluids flow in a direction indicated by the arrow shown in the figure (z direction) within the first and second flow channels 12a and 14a, respectively, in the partition wall structure 10 illustrated in FIG. 3, the first fluid that flows through the respective first flow channels 12a while turning in opposite directions joins such that its respective flow directions are aligned in a forward direction, and the second fluid that flows through the respective second flow channels 14a while turning in opposite directions joins such that its respective flow directions are aligned in the forward direction, both in regions where the adjacent first and second flow channel elements 10A and 10B are in contact with each other. Then, the first fluid flows further to the downstream side and splits into the first flow channels 12a of the first flow channel elements 10A and the first flow channels 12a of the second flow channel elements 10B by the flow channel walls located on the downstream side. The second fluid also flows further to the downstream side and splits into the second flow channels 14a of the first flow channel elements 10A and the second flow channels 14a of the second flow channel elements 10B by the flow channel walls located on the downstream side. The first and second fluids flow within the partition wall structure 10 to the downstream side in the extending direction while thus repeating the joining and the splitting between the adjacent first flow channels 12a and between the adjacent second flow channels 14a, respectively.

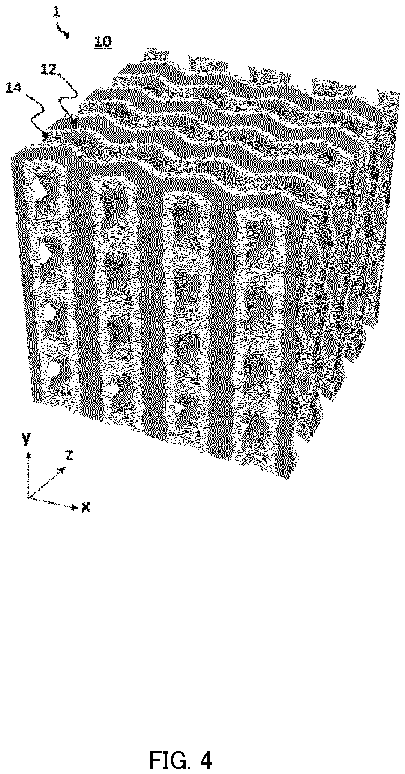

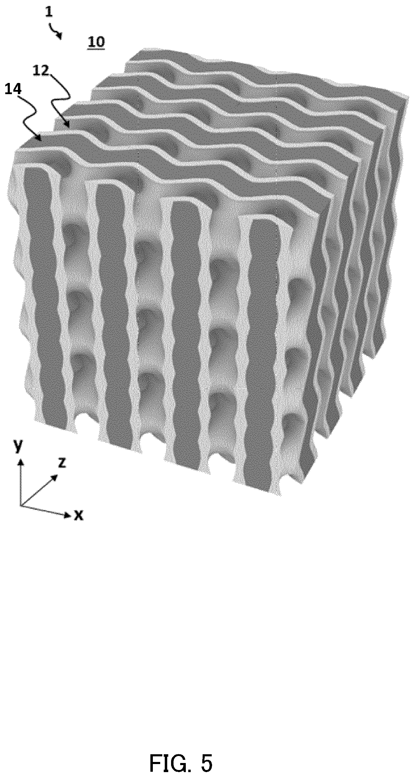

FIG. 4 is a diagram illustrating a state in which the first flow channel space of the structure illustrated in FIG. 1 is filled with the first fluid, and FIG. 5 is a diagram illustrating a state in which the second flow channel space of the structure illustrated in FIG. 1 is filled with the second fluid. FIG. 4 shows that the first fluid flows through the first flow channel space 12 formed by the plurality of first flow channels 12a, formed in the partition wall structure 10 of the structure 1, communicating with each other. Further, FIG. 5 shows that the second fluid flows through the second flow channel space 14 formed by the plurality of second flow channels 14a, formed in the partition wall structure 10 of the structure 1, communicating with each other.

As described above, the structure 1 of the present embodiment includes the partition wall structure 10 that forms the first flow channel space 12 and the second flow channel space 14 with the first and second flow channel spaces 12 and 14 separated from each other. In the first flow channel space 12, the plurality of first flow channels 12a extending spirally in a certain predetermined direction (for example, the y direction shown in the figures such as FIG. 1) are formed in communication with each other. In the second flow channel space 14, the plurality of second flow channels 14a extending spirally in the above direction are formed in communication with each other. Any two adjacent first flow channels 12a among the plurality of first flow channels 12a are formed such that, when viewed along the above direction, one first flow channel 12a of the two adjacent first flow channels 12a turns in the first direction (for example, counterclockwise) and the other first flow channel 12a of the two adjacent first flow channels 12a turns in the second direction (for example, clockwise) opposite to the first direction. Similarly, any two adjacent second flow channels 14a among the plurality of second flow channels 14a are formed such that, when viewed along the above direction, one second flow channel 14a of the two adjacent second flow channels 14a turns in the first direction (for example, counterclockwise) and the other second flow channel 14a of the two adjacent first flow channels 12a turns in the second direction (for example, clockwise) opposite to the first direction.

According to the structure 1 of the present embodiment thus configured, the first fluid that flows in the above direction while turning in opposite directions in the any two adjacent first flow channels 12a within the partition wall structure 10 joins such that its respective flow directions are aligned in the forward direction, and then splits into the two adjacent first flow channels 12a by the flow channel walls located on the downstream side, thus flowing to the downstream side in the above direction while repeating these joining and splitting. Similarly, the second fluid that flows in the above direction while turning in opposite directions in the any two adjacent second flow channels 14a within the partition wall structure 10 joins such that its respective flow directions are aligned in the forward direction, and then splits into the two adjacent second flow channels 14a by the flow channel walls located on the downstream side, thus flowing to the downstream side in the above direction while repeating these joining and splitting.

In the region where the first fluid that flows through the any two adjacent first flow channels 12a joins and in the region where the second fluid that flows through the any two adjacent second flow channels 14a joins, the fluids join such that their respective flow directions are aligned in the forward direction. Thus, compared to the known structures in which the fluids that turn in opposite directions collide with each other and join, it is possible to eliminate or reduce possible hindrance of the fluid flow, and it is also possible to eliminate or reduce possible stagnation of the fluid flow in the region where the fluids join. Consequently, the structure 1 of the present embodiment can eliminate or reduce an increase in pressure loss that may be caused by the hindrance and/or the stagnation of the fluid flow, thereby further increasing heat exchange efficiency, when it is used as a heat exchanger.

Note that in the above, the partition wall structure 10 in the present embodiment has been described as being configured such that the first flow channel elements 10A and the second flow channel elements 10B are alternately disposed in a lattice shape, for the sake of easy understanding, but this does not necessarily mean that the partition wall structure 10 is produced by alternately combining in a lattice shape the first flow channel elements 10A and the second flow channel elements 10B that have been molded separately. While the partition wall structure 10 may be produced by combining the separately molded first and second flow channel elements 10A and 10B to be alternately joined in a lattice shape, it is also possible to integrally produce the partition wall structure 10 configured such that the first flow channel elements 10A and the second flow channel elements 10B are alternately combined in a lattice shape, by using an available production technique such as casting, 3D printing, or optical shaping using a light-curable resin.

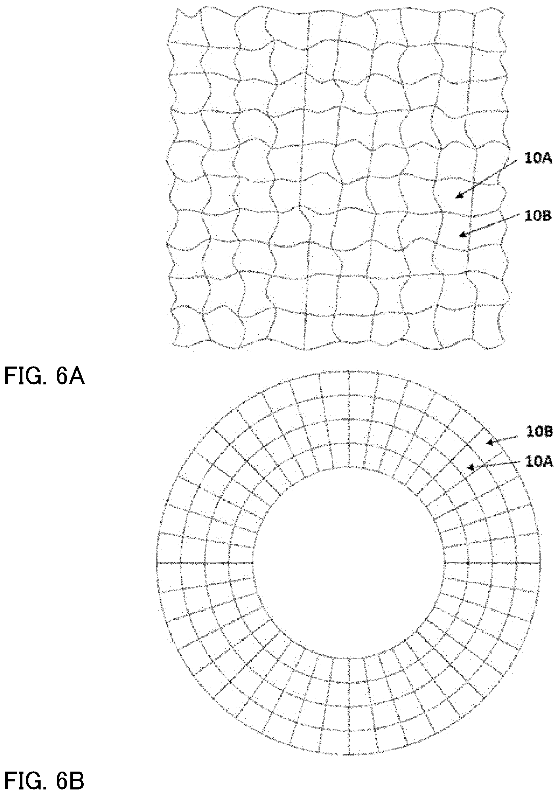

Further, it has been described in the above example that the respective flow channel elements 10A and 10B have the shape cut out in the cuboidal shape along the central axis of the ordinary helicoid and that the dimensions of each part of the second flow channel element 10B such as, for example, the pitch of the ordinary helicoid extending in the extending direction, and the thickness t provided to the ordinary helicoid are the same as those of the first flow channel element 10A. However, shapes and configurations of the flow channel elements 10A and 10B are not limited to this. The first and second flow channel elements 10A and 10B may have any shapes in which their sides are defined by any given surface (flat surface or curved surface) extending along the central axis of the ordinary helicoid, if the first and second flow channel elements 10A and 10B are disposed such that sides of the adjacent first and second flow channel elements 10A and 10B, where partition wall cross-sectional shapes appearing on these sides are chiral to each other, are in contact with each other, and if the first and second flow channel elements 10A and 10B are configured such that both of the first and second flow channel elements 10A and 10B can be spread in a space without gaps. Examples of such shapes of the respective flow channel elements include shapes such that those in a plane orthogonal to the central axis of the ordinary helicoid are a rectangular shape and a triangular shape and additionally the shapes exemplified below with reference to FIGS. 6A and 6B.

FIGS. 6A and 6B are conceptual diagrams illustrating other partition wall structures composed of flow channel elements having other shapes and configurations. FIG. 6A and FIG. 6B each illustrate a diagram of a partition wall structure when viewed along its extending direction (corresponding to the z direction in FIG. 1). In FIG. 6A and FIG. 6B, reference numerals 10A and 10B are shown one by one for the visibility of the figures, but in fact the flow channel elements 10A and 10B are alternately disposed in a lattice shape.

In the example of FIG. 6A, each of the flow channel elements 10A and 10B has four sides of any shape, and any adjacent flow channel elements 10A and 10B have shapes in which at least cross sections of their sides that are in contact with each other are chiral to each other. The respective flow channel elements 10A and 10B form a partition wall structure having a substantially cuboidal-shape as a whole with the gaps therebetween filled.

FIG. 6B illustrates an example in which the flow channel elements 10A and 10B form a partition wall structure having a hollow cylindrical shape. In the example of FIG. 6B, each of the flow channel elements 10A and 10B has a shape defined by an inner-diameter-side arc-shaped curved surface that is a part of a circumferential curved surface on the inner diameter side of a hollow cylinder, an outer-diameter-side arc-shaped curved surface that is a part of a circumferential curved surface on the outer diameter side of the hollow cylinder, and planar sides that are a part of a flat surface in a radial direction of the hollow cylinder. The size of the respective flow channel elements 10A and 10B gradually increases from that of the one disposed on the inner diameter side to that of the one disposed on the outer diameter side. Also in the example in FIG. 6B, any adjacent flow channel elements 10A and 10B have shapes in which at least cross sections of their sides that are in contact with each other are chiral to each other. The respective flow channel elements 10A and 10B form a partition wall structure having a hollow cylindrical shape as a whole with the gaps therebetween filled.

### Variations

Next, variations of the structure 1 of the present embodiment will be described.

### First Variation

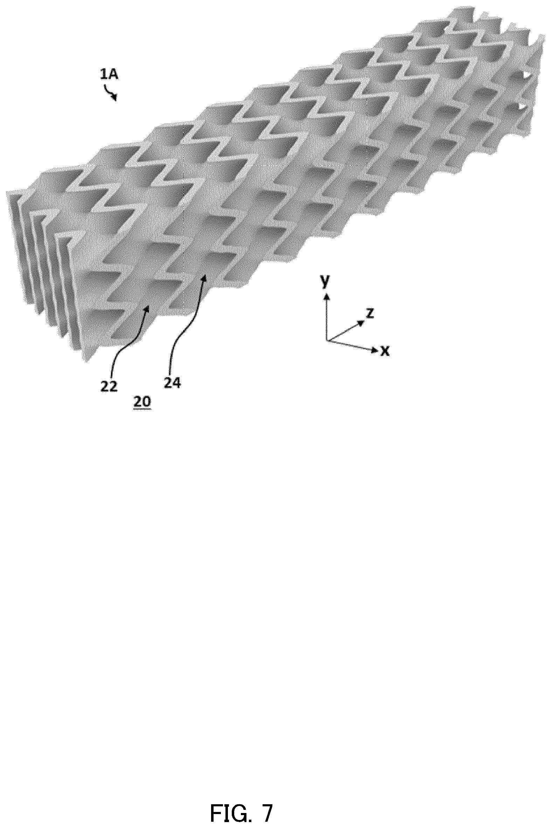

FIG. 7 is a perspective view illustrating a first variation of the structure according to the embodiment of the present disclosure.

Similar to the partition wall structure 10 illustrated in the figures such as FIG. 1, a partition wall structure 20 in a structure 1A of the present variation forms a first flow channel space 22 in which a plurality of first flow channels through which a first fluid flows are formed in communication with each other and a second flow channel space 24 in which a plurality of second flow channels through which a second fluid flows are formed in communication with each other. These two flow channel spaces 22 and 24 are separated from each other by the partition wall structure 20, and the first and second fluids that flow through the two flow channel spaces 22 and 24, respectively, do not mix with each other. Also in the partition wall structure 20 of the present variation, any two adjacent first flow channels among the plurality of first flow channels are formed such that, when viewed along their extending direction, one first flow channel of the two adjacent first flow channels turns in a first direction (for example, counterclockwise), and the other first flow channel of the two adjacent first flow channels turns in a second direction (for example, clockwise) opposite to the first direction. Similarly, any two adjacent second flow channels among the plurality of second flow channels are also formed such that, when viewed along their extending direction, one second flow channel of the two adjacent second flow channels turns in the first direction (for example, counterclockwise) and the other second flow channel of the two adjacent second flow channels turns in the second direction (for example, clockwise) opposite to the first direction. Also in the structure 1A of the present variation, each flow channel extends linearly along the extending direction (z direction shown in the figure).

As described above for the structure 1, each of the flow channel spaces 22 and 24 is closed at its end that appears at a relevant face of the structure 1A according to a direction in which the corresponding one of the first and second fluids flows within the structure 1A (for example, when the first fluid and the second fluid are flowed within the structure 1A of FIG. 7 in the depth direction shown in the figure (z-axis direction), ends that appear at each face of the structure 1A in the left-right direction shown in the figure (yz plane) and each face of the structure 1A in the up-down direction shown in the figure (xz plane) are closed), and the structure 1A of the present variation can be used for the application of heat exchange.

Also in the structure 1A of the present variation thus configured, each of the first and second fluids joins such that its flow directions are aligned in the forward direction in each region where the corresponding adjacent flow channels join to each other, as in the case of the structure 1 described above, thus making it possible to eliminate or reduce possible hindrance of the fluid flow and also making it possible to eliminate or reduce possible stagnation of the fluid flow in the region where the fluids joins. Consequently, when used as a heat exchanger, the structure 1A of the present variation also can eliminate or reduce an increase in pressure loss that may be caused by the hindrance and/or the stagnation of the fluid flow, thereby further increasing heat exchange efficiency, when it is used as a heat exchanger.

The structure 1A of the present variation differs from the above-described structure 1 in a pitch of a helicoid curved surface that forms each flow channel. By changing the pitch of the helicoid curved surface in this way, it is possible to adjust a cross-sectional area of each flow channel (or "a volume of each flow channel occupied in a unit volume"; hereinafter the same) defined by its wall surface. This makes it possible to design each flow channel having a cross-sectional area that can achieve desired heat exchange characteristics, by considering a trade-off between pressure loss that may occur in a fluid flowing through each flow channel and heat exchange efficiency.

Note that the variation illustrated in FIG. 7 shows an example in which a ratio of the cross-sectional area of the first flow channel forming the first flow channel space 22 to the cross-sectional area of the second flow channel forming the second flow channel space 24 is uniform, but the pitch of the helicoid curved surface forming each flow channel may be changed such that the ratio of the cross-sectional area of the first flow channel to the cross-sectional area of the second flow channel varies. The ratio of the cross-sectional area of the first flow channel to the cross-sectional area of the second flow channel may vary constantly along the extending direction, or may vary so as to change continuously along the extending direction.

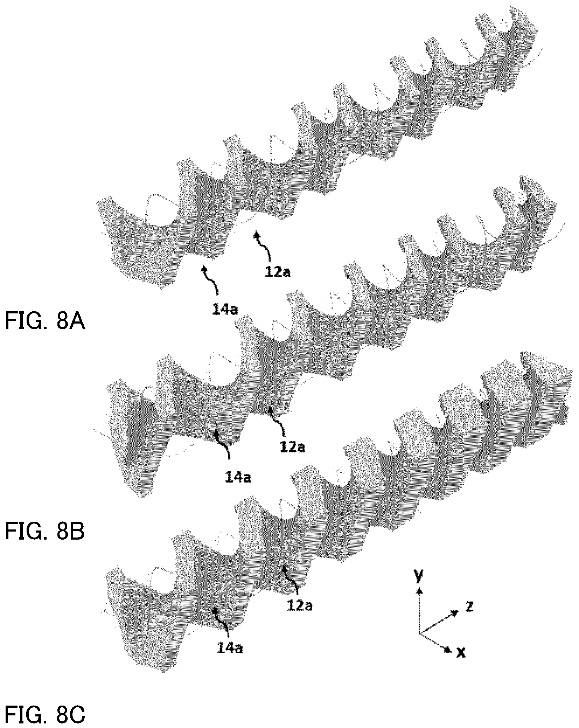

FIG. 8A to FIG. 8C are diagrams illustrating other configuration examples relating to the cross-sectional areas of the first flow channel and the second flow channel within the partition wall structure. Each of FIG. 8A and FIG. 8B illustrates an example in which the ratio of the cross-sectional area of the first flow channel to the cross-sectional area of the second flow channel within the partition wall structure varies, by referring to one flow channel element. FIG. 8A illustrates an example in which the ratio of the cross-sectional area of the first flow channel 12a to the cross-sectional area of the second flow channel 14a within the partition wall structure varies constantly along the extending direction. FIG. 8B illustrates an example in which the ratio of the cross-sectional area of first flow channel 12a and the cross-sectional area of second flow channel 14a within the partition wall structure varies so as to change continuously along the extending direction. The examples illustrated in FIG. 8A and FIG. 8B are merely an example. For example, the ratio of the cross-sectional area of the first flow channel 12a to the cross-sectional area of the second flow channel 14a may be uniform in a part of the partition wall structure in the extending direction while varying constantly or varying so as to change continuously or stepwise in another part of the partition wall structure in the extending direction.

Further, in the above, the example of forming the shape having the uniform thickness t in the helicoid curved surface (ordinary helicoid) has been described, but the thickness t of the flow channel wall composed of the ordinary helicoid is not limited to be uniform. The thickness t of the flow channel wall may partially vary within the partition wall structure 10. As an example, the thickness t of the flow channel wall may change continuously or stepwise along the extending direction of the partition wall structure 10 as illustrated in FIG. 8C. In the example illustrated in FIG. 8C, the thickness t of the flow channel wall changes continuously along the extending direction of the partition wall structure 10. In this example, the cross-sectional area of the first flow channel 12a and the cross-sectional area of the second flow channel 14a decrease gradually as they go in the z direction shown in the figure, but the ratio of the cross-sectional area of the first flow channel 12a to the cross-sectional area of the second flow channel 14a is kept uniform. This configuration makes it possible to change flow rate of the fluid flowing through each flow channel in the partition wall structure and thermal conductivity of the heat conducted through the partition wall, providing the partition wall structure with a distribution of heat exchange characteristics.

### Second Variation

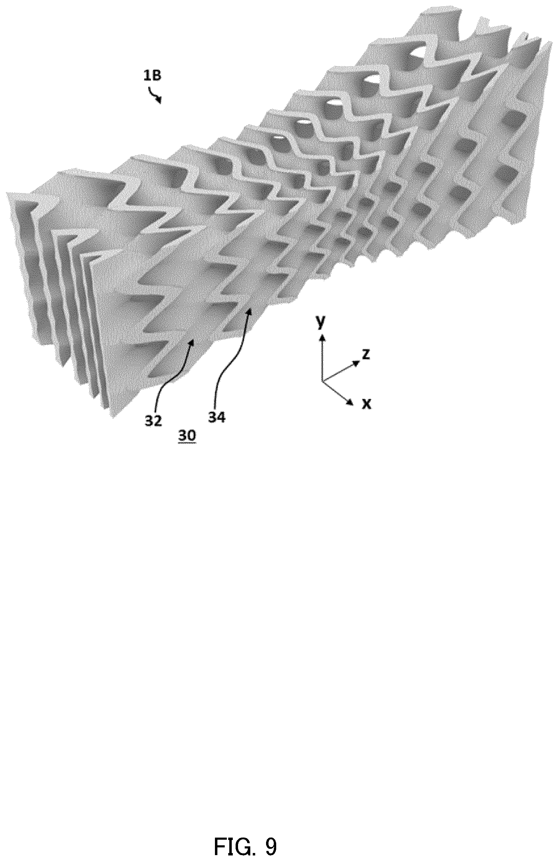

FIG. 9 is a perspective view illustrating a second variation of the structure according to the embodiment of the present disclosure.

A partition wall structure 30 in a structure 1B of the present variation is based on the partition wall structure 20 of the structure 1A illustrated in FIG. 7 as a basic structure and has a shape obtained by modifying that partition wall structure 20. The partition wall structure 30 in the present variation also forms a first flow channel space 32 in which a plurality of first flow channels through which a first fluid flows are formed in communication with each other and a second flow channel space 34 in which a plurality of second flow channels through which a second fluid flows are formed in communication with each other, with these two flow channel spaces 32 and 34 separated from each other. Also in the partition wall structure 30 of the present variation, any two adjacent first flow channels among the plurality of first flow channels are formed such that, when viewed along their extending direction, one first flow channel of the two adjacent first flow channels turns in a first direction (for example, counterclockwise) and the other first flow channel of the two adjacent first flow channels turns in a second direction (for example, clockwise) opposite to the first direction. Similarly, any two adjacent second flow channels among the plurality of second flow channels are also formed such that, when viewed along their extending direction, one second flow channel of the two adjacent second flow channels turns in the first direction (for example, counterclockwise) and the other second flow channel of the two adjacent second flow channels turns in the second direction (for example, clockwise) opposite to the first direction.

Specifically, first, the partition wall structure 30 of the present variation is formed such that the pitch of a helicoid curved surface, which forms each flow channel extending in the extending direction (z direction), in its extending direction changes so as to decrease gradually from one end side (for example, the left side in the figure) of the partition wall structure 30 in the extending direction toward the central part of the partition wall structure 30 and then increase gradually from the central part of the partition wall structure 30 toward the other end side (for example, the right side in the figure) of the partition wall structure 30 in the extending direction.

Second, the partition wall structure 30 is formed such that the diameter of the partition wall structure 30 changes so as to decrease gradually from one end side (for example, the left side in the figure) of the partition wall structure 30 in the extending direction toward the central part of the partition wall structure 30 and then increase gradually from the central part of the partition wall structure 30 toward the other end side (for example, the right side in the figure) of the partition wall structure 30 in the extending direction. This causes, inside the partition wall structure 30, the diameter of each flow channel element (thus, the diameter of each flow channel) to decrease gradually from one end side (for example, the left side in the figure) of the partition wall structure 30 in the extending direction toward the central part of the partition wall structure 30 and then the diameter of each flow channel element (thus, the diameter of each flow channel) to increase gradually from the central part of the partition wall structure 30 toward the other end side (for example, the right side in the figure) of the partition wall structure 30 in the extending direction.

Third, the partition wall structure 30 is formed such that the width of each flow channel element in the x direction shown in the figure (thus, the width of each flow channel in the x direction shown in the figure) decreases gradually from the back side to the front side in the x direction shown in the figure. The width of each flow channel element in the y direction shown in the figure (thus, the width of each flow channel in the y direction shown in the figure) is constant. Consequently, the shape of the flow channels formed in each flow channel element has a vertically long shape whose dimension in the x direction shown in the figure is smaller as it goes toward the front side in the x direction shown in the figure, while having an equal dimension in the xy direction shown in the figure on the back side in the x direction shown in the figure.

In the partition wall structure 30 of the present variation, flow channels near the central part in the xy plane shown in the figure, among the respective flow channels extending in the extending direction (z direction), extend in a linear shape along the z direction, and flow channels disposed from the central part to the outer peripheral part of the partition wall structure 30 in the xy plane shown in the figure extend in a curved state such that the closer the flow channels to the outer peripheral part, the larger the curvature of those flow channels. In this way, the "extending direction" of each flow channel formed in the partition wall structure of the structure disclosed in the present specification and the drawings also means a direction extending in a curved shape in addition to a direction extending linearly.

According to the structure 1B of the present variation thus configured, it is possible to change, within the partition wall structure 30, the cross-sectional area (volume per unit volume) of each flow channel formed within the partition wall structure 30 and the shape of such each flow channel, and consequently, it is possible to provide a distribution of heat exchange characteristics within the partition wall structure 30 when the structure 1B is used as a heat exchanger, in addition to the above-described actions and effects of the structures 1 and 1A.

### Third Variation

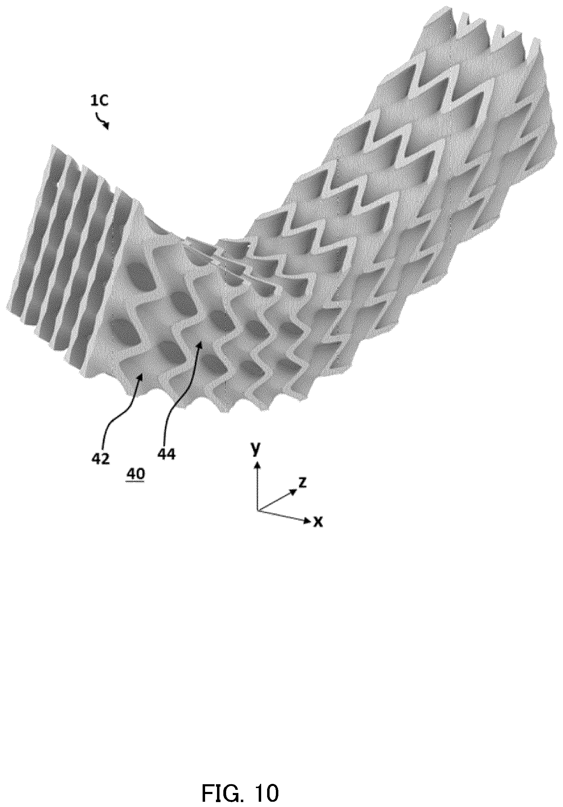

FIG. 10 is a perspective view illustrating a third variation of the structure according to the embodiment of the present disclosure.

A partition wall structure 40 in a structure 1C of the present variation is also based on the partition wall structure 20 of the structure 1A illustrated in FIG. 7 as a basic structure and has a shape obtained by modifying that partition wall structure 20. The partition wall structure 40 in the present variation also forms a first flow channel space 42 in which a plurality of first flow channels through which a first fluid flows are formed in communication with each other and a second flow channel space 44 in which a plurality of second flow channels through which a second fluid flows are formed in communication with each other, with these two flow channel spaces 42 and 44 separated from each other. Also in the partition wall structure 40 of the present variation, any two adjacent first flow channels among the plurality of first flow channels are formed such that, when viewed along their extending direction, one first flow channel of the two adjacent first flow channels turns in a first direction (for example, counterclockwise) and the other first flow channel of the two adjacent first flow channels turns in a second direction (for example, clockwise) opposite to the first direction. Similarly, any two adjacent second flow channels among the plurality of second flow channels are also formed such that, when viewed along their extending direction, one second flow channel of the two adjacent second flow channels turns in the first direction (for example, counterclockwise) and the other second flow channel of the two adjacent second flow channels turns in the second direction (for example, clockwise) opposite to the first direction.

Specifically, while the partition wall structure 20 of the structure 1A illustrated in FIG. 7 extends linearly in the extending direction (z direction), the partition wall structure 40 in the structure 1C of the present variation has a curved shape in the yz plane as a whole. Consequently, each flow channel formed inside the partition wall structure 40 extends in a curved line by being curved as with the curve of the entire partition wall structure 40. FIG. 10 illustrates an example in which the partition wall structure 40 is curved in a two-dimensional manner in one direction, but the curve of the structure 1C in the present variation is not limited to this. For example, the partition wall structure 40 may be curved along a curved surface extending in a three-dimensional manner in an arbitrary direction.

According to the structure 1C of the present variation thus configured, it is possible to form, inside the partition wall structure 40, flow channels extending along a desired curved line in a case where the inside flow channels need to extend in a curved line when the structure 1C is used as a heat exchanger, for example, in addition to the above-described actions and effects of structures 1 and 1A.

### Fourth Variation

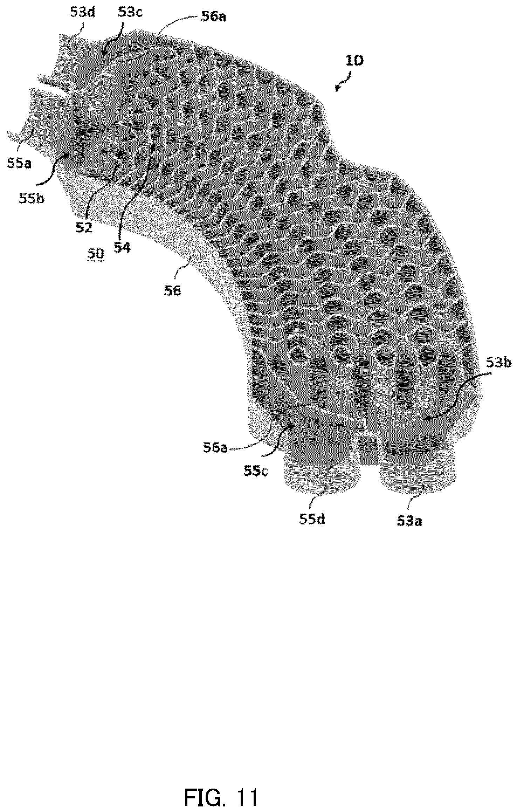

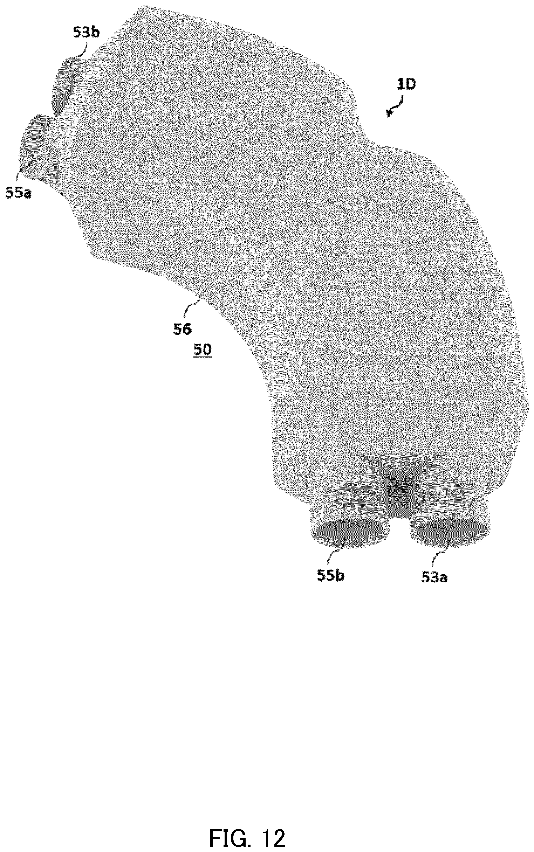

FIG. 11 is a perspective view illustrating a structure according to a fourth variation of the embodiment of the present disclosure in a partially broken state, and FIG. 12 is a perspective view illustrating the entire structure illustrated in FIG. 11.

As illustrated in FIG. 11, a partition wall structure 50 in a structure 1D of the present variation also forms a first flow channel space 52 in which a plurality of first flow channels through which a first fluid flows are formed in communication with each other and a second flow channel space 54 in which a plurality of second flow channels through which a second fluid flows are formed in communication with each other, with these two flow channel spaces 52 and 54 separated from each other, as with the partition wall structures of the above-described embodiment and respective variations. Also in the partition wall structure 50 of the present variation, any two adjacent first flow channels among the plurality of first flow channels are formed such that, when viewed along their extending direction, one first flow channel of the two adjacent first flow channels turns in a first direction (for example, counterclockwise) and the other first flow channel of the two adjacent first flow channels turns in a second direction (for example, clockwise) opposite to the first direction. Similarly, any two adjacent second flow channels among the plurality of second flow channels are also formed such that, when viewed along their extending direction, one second flow channel of the two adjacent second flow channels turns in the first direction (for example, counterclockwise) and the other second flow channel of the two adjacent second flow channels turns in the second direction (for example, clockwise) opposite to the first direction.

The partition wall structure 50 in the present variation has a curved shape in a plane as a whole just like the partition wall structure 40 illustrated in FIG. 10, and has a recessed shape at the side on the right side shown in the figure. Consequently, each flow channel formed within the partition wall structure 50 is curved according to the overall shape of the partition wall structure 50, and the diameter (flow channel cross-sectional area or volume per unit volume) of each flow channel in the recessed region of the partition wall structure 50 is smaller than that of the other region with no recess.

Referring to FIGS. 11 and 12, the structure 1D further includes a peripheral wall surface 56 that forms a space that accommodates the partition wall structure 50. The peripheral wall surface 56 is in contact with the entire sides along the extending direction of the partition wall structure 50. The ends of the first and second flow channels of the partition wall structure 50 at a portion where the peripheral wall surface 56 is in contact with the partition wall structure 50 are closed by the peripheral wall surface 56.

The peripheral wall surface 56 forms a first inlet space 53b and a second outlet space 55c between the peripheral wall surface 56 and an end of the partition wall structure 50 on the lower side shown in the figure. These spaces 53b and 55c are partitioned in a state of being separated from each other by a partition wall 56a formed in the peripheral wall surface 56. In an end of the partition wall structure 50 on the lower side shown in the figure, the portion exposed to the first inlet space 53b is formed such that openings of the respective second flow channels are closed, and the portion exposed to the second outlet space 55c is formed such that openings of the respective first flow channels are closed. A first inlet opening 53a is formed at a portion of the peripheral wall surface 56 that communicates with the first inlet space 53b, and a second outlet opening 55d is formed at a portion of the peripheral wall surface 56 that communicates with the second outlet space 55c.

Further, the peripheral wall surface 56 forms a second inlet space 55b and a first outlet space 53c between the peripheral wall surface 56 and an end of the partition wall structure 50 on the upper left side shown in the figure. These spaces 55b and 53c are partitioned in a state of being separated from each other by the partition wall 56a formed in the peripheral wall surface 56. In an end of the partition wall structure 50 on the upper left side shown in the figure, the portion exposed to the second inlet space 55b is formed such that openings of the respective first flow channels are closed, and the portion exposed to the first outlet space 53c is formed such that openings of the respective second flow channels are closed. A second inlet opening 55a is formed at a portion of the peripheral wall surface 56 that communicates with the second inlet space 55b, and a first outlet opening 53d is formed at a portion of the peripheral wall surface 56 that communicates with the first outlet space 53c.

According to the structure 1D thus configured, when the first fluid is flowed into the structure 1D from the first inlet opening 53a, for example, the first fluid flows into the partition wall structure 50 through the first inlet space 53a from the respective first flow channels that are open at an end surface of the partition wall structure 50 on the lower side shown in the figure, flows through the first flow channel space 52 communicating over the entirety inside the partition wall structure 50, flows out into the first outlet space 53c from an end surface of the partition wall structure 50 on the upper left side shown in the figure, and finally flows out to the outside of the structure 1D from the first outlet opening 53. At this time, the first inlet space 53a functions to distribute the incoming first fluid to the respective first flow channels that are open at the end surface of the partition wall structure 50, and the first outlet space 53c functions to collect the outgoing first fluid from the respective first flow channels of the partition wall structure 50 toward the first outlet opening 53d.

On the other hand, when the second fluid is flowed into the structure 1D from the second inlet opening 55a, the second fluid flows into the partition wall structure 50 through the second inlet space 55b from the respective second flow channels that are open at the end surface of the partition wall structure 50 on the upper left side shown in the figure, flows through the second flow channel space 54 communicating over the entirety inside the partition wall structure 50, flows out into the second outlet space 55c from the end surface of the partition wall structure 50 on the lower side shown in the figure, and finally flows out to the outside of the structure 1D from the second outlet opening 55d. At this time, the second inlet space 55b functions to distribute the incoming second fluid to the respective second flow channels that are open at the end surface of the partition wall structure 50, and the second outlet space 55c functions to collect the outgoing second fluid from the respective second flow channels of the partition wall structure 50 toward the second outlet opening 55d.

When there is a difference in temperature between the first fluid flowing through the first flow channel space 52 and the second fluid flowing through the second flow channel space 54, heat of one fluid is transferred to the other fluid through the wall of the partition wall structure 50 that separates both flow channel spaces 52 and 54. This causes heat exchange in which one fluid is heated by the other fluid and conversely the other fluid is cooled by the one fluid. The structure 1D of the present variation can function for the application of heat exchange in this way. The structure 1D of the present variation is also applicable to, for example, heat exchangers for various industrial uses and heat exchangers used for aircraft engines, power plants, and the like.

Since the partition wall structure 50 of the present variation also has a configuration in which any two adjacent first flow channels among the plurality of first flow channels extend in the extending direction while turning in opposite directions, and any two adjacent second flow channels among the plurality of second flow channels extend in the extending direction while turning in opposite directions, each of the first and second fluids joins such that its flow directions are aligned in the forward direction in each region where the corresponding adjacent flow channels join to each other, thus making it possible to eliminate or reduce possible hindrance of the fluid flow that may be caused by collisions between the fluids and making it also possible to eliminate or reduce possible stagnation of the fluid flow in the region where the fluids join. Consequently, the structure 1D of the present variation can eliminate or reduce disadvantages that may be caused by the hindrance and/or the stagnation of the fluid flow, such as an increase in pressure loss and a decrease in heat transfer rate, thereby further increasing heat exchange efficiency, when it is used as a heat exchanger.

Note that in the above, such a case where the first fluid is flowed into the structure 1D from the first inlet opening 53a and then flowed out to the outside of the structure 1D from the first outlet opening 53d and the second fluid is flowed into the structure 1D from the second inlet opening 55a and then flowed out to the outside of the structure 1D from the second outlet opening 55d has been described, but the first and second fluids may be flowed in opposite directions, respectively. That is, the first fluid may be flowed into the structure 1D from the first outlet opening 53d and then flowed out to the outside of the structure 1D from the first inlet opening 53a, and the second fluid may be flowed into the structure 1D from the second outlet opening 55d and then flowed out to the outside of the structure 1D from the second inlet opening 55a.

A part or all of the structures of the present embodiment and the respective variations can be formed of a resin material, a metal material, or the like using an additional production technique, for example. Examples of the additional production technique that can be used include 3D printing, optical shaping using a light-curable resin, and the like. Note that it is not essential to use such an additional production technique in the production of the above-described structures, and the structures may be produced by using, when the structures have a shape that can be produced with another production technique (for example, cutting, casting, mold forming, injection molding, powder compression molding, or laser processing), this production technique other than the additional production technique.

While the present disclosure has been described with reference to the embodiment and variations disclosed herein, the embodiment and variations are not intended to limit the invention according to the scope of the claims. Further, any combination of the features described in the embodiment and variations of the present disclosure shall be also included in the technical scope of the present disclosure.

## Claims

1. A structure for heat exchange, the structure comprising:
a partition wall structure that forms a first flow channel space and a second flow channel space with the first flow channel space and the second flow channel space separated from each other, the first flow channel space being a space in which a plurality of first flow channels extending spirally in a certain direction are formed in communication with each other, the second flow channel space being a space in which a plurality of second flow channels extending spirally in the certain direction are formed in communication with each other, wherein
two adjacent first flow channels among the plurality of first flow channels are formed such that, when viewed along the direction in which the plurality of first flow channels extend, one first flow channel of the two adjacent first flow channels turns in a first direction, and the other first flow channel of the two adjacent first flow channels turns in a second direction opposite to the first direction, and
two adjacent second flow channels among the plurality of second flow channels are formed such that, when viewed along the direction in which the plurality of second flow channels extend, one second flow channel of the two adjacent second flow channels turns in the first direction, and the other second flow channel of the two adjacent second flow channels turns in the second direction opposite to the first direction.

2. The structure according to claim 1, wherein the partition wall structure has a first flow channel element and a second flow channel element alternately disposed, the first flow channel element being formed based on a first helicoid curved surface that forms the first flow channel and the second flow channel that turn in the first direction, the second flow channel element being formed based on a second helicoid curved surface that forms the first flow channel and the second flow channel that turn in the second direction.

3. The structure according to claim 1, wherein the partition wall structure is formed such that a ratio of a volume occupied by the first flow channel to a volume occupied by the second flow channel in a unit volume is uniform.

4. The structure according to claim 1, wherein the partition wall structure is formed such that a ratio of a volume occupied by the first flow channel to a volume occupied by the second flow channel in a unit volume varies.

5. The structure according to claim 1, wherein the partition wall structure is formed such that a ratio of a volume occupied by the first flow channel to a volume occupied by the second flow channel in a unit volume varies along the direction in which the plurality of first flow channels and the plurality of second flow channels extend.

6. The structure according to claim 1, wherein the partition wall structure is formed such that the plurality of first flow channels and the plurality of second flow channels extend in a linear shape or in a curved shape.

7. A heat exchanger, comprising the structure according to any one of claims 1 to 6.
